# EUROPÄISCHE PATENTSCHRIFT

(11) **EP 4 035 314 B1**
(45) Veröffentlichungstag und Bekanntmachung des Hinweises auf die Patenterteilung: **25.12.2024**
(21) Anmeldenummer: 20775182.7
(22) Anmeldetag: 09.09.2020
(51) Int. Cl.: H04L 12/403

(54) **SLAVEEINRICHTUNG, BUSSYSTEM UND VERFAHREN**
SLAVE DEVICE, BUS SYSTEM, AND METHODS
DISPOSITIF ESCLAVE, SYSTÈME DE BUS ET PROCÉDÉS

(30) Priorität: 23.09.2019 DE 102019125493
(43) Veröffentlichungstag der Anmeldung: 03.08.2022
(73) Patentinhaber: Infineon Technologies AG, 85579 Neubiberg (DE)
(72) Erfinder: MICHENTHALER, Christof, 9613 Feistritz/Gail (AT); AICHRIEDLER, Leo, 9722 Puch (AT); HAFNER, Thomas, 9020 Klagenfurt (AT); HAMMERSCHMIDT, Dirk, 9584 Finkenstein (AT)
(74) Vertreter: Kraus & Lederer PartGmbB
(86) Internationale Anmeldenummer: PCT/EP2020/000153
(87) Internationale Veröffentlichungsnummer: WO 2021/058123

(56) Entgegenhaltungen:
- DE-A1- 102010 041 810
- DE-A1- 102010 063 528
- DE-B3- 102017 130 933
- US-A1- 2001 030 904

## Beschreibung

### TECHNISCHES GEBIET

Die vorliegende Anmeldung betrifft Slaveeinrichtungen, Bussysteme sowie entsprechende Verfahren.

### HINTERGRUND

Bussysteme ermöglichen eine Kommunikation mehrerer Busteilnehmer untereinander. Ein Anwendungsbeispiel sind Sensorsysteme, bei denen mehrere Sensoren als Slaveeinrichtungen mit einer Steuereinheit als Mastereinrichtung kommunizieren, beispielsweise in einem Automobilsystem. Bei manchen Anwendungen ist es dabei nötig, den verschiedenen Sensoren eindeutige Adressen zuzuordnen, sodass die Steuereinheit die Sensoren einzeln über einen gemeinsamen Bus ansteuern kann.

Bei manchen herkömmlichen Herangehensweisen werden derartige Adressen Slaves wie beispielsweise Sensoren oft am Ende der Produktion oder im Rahmen einer Konfiguration beim Aufbau eines Bussystems fest zugewiesen. Es werden dann also entsprechend vorkonfigurierte Slaveeinrichtungen verwendet. Dies ist relativ unflexibel und kann zudem in Fällen, in denen mehrere Sensoren eine einzige physikalische Schnittstelle teilen, nur mit großem Aufwand durchführbar sein.

Eine Adressvergabe im Betrieb ist in der US 2001 / 030904 Al offenbart. Dabei werden Slaves Daisy-Chain-artig verbunden, und die Adresszuweisung erfolgt sequenziell.

### KURZFASSUNG

Es werden ein Verfahren nach Anspruch 1, eine Slaveeinrichtung nach Anspruch 11 sowie ein System nach Anspruch 13 bereitgestellt. Die Unteransprüche definieren weitere Ausführungsformen.

Gemäß einem Ausführungsbeispiel wird ein Verfahren bereitgestellt, umfassend:
in einer Slaveeinrichtung,
   - Empfangen eines Initialisierungssignals,
   - in Antwort auf das Initialisierungssignal, Senden einer Identifizierung der Slaveeinrichtung über einen Bus,
Prüfen, ob beim Senden der Initialisierungsidentifizierung eine Kollision auf dem Bus auftritt,
   - wenn eine Kollision auftritt, Setzen der Slaveeinrichtung in einen inaktiven Zustand, und
   - wenn keine Kollision auftritt, Empfangen einer Adresse für die Slaveeinrichtung nach dem Senden der Identifizierung.

Gemäß einem weiteren Ausführungsbeispiel wird eine Slaveeinrichtung bereitgestellt, umfassend:
eine Kommunikationsschaltung zum Senden von Signalen zu einem Bus und zum Empfangen von Signalen von einem Bus, wobei die Slaveeinrichtung eingerichtet ist zum:
   - Empfangen eines Initialisierungssignals,
   - in Antwort auf das Initialisierungssignal, Senden einer Identifizierung der Slaveeinrichtung, über einen Bus,
Prüfen, ob beim Senden der Identifizierung eine Kollision auf dem Bus auftritt,
   - wenn eine Kollision auftritt, Setzen der Slaveeinrichtung in einen inaktiven Zustand, und
   - wenn keine Kollision auftritt, Empfangen einer Adresse für die Slaveeinrichtung nach dem Senden der Identifizierung.

Die obige Kurzfassung dient lediglich als kurzer Überblick über manche Ausführungsbeispiele und ist nicht als einschränkend auszulegen. Insbesondere können andere Ausführungsbeispiele andere Merkmale als die oben diskutierten Merkmale aufweisen.

### KURZE BESCHREIBUNG DER ZEICHNUNGEN

Fig. 1 ist ein Diagramm eines Bussystems gemäß einem Ausführungsbeispiel.
Fig. 2 ist ein Flussdiagramm zur Veranschaulichung von Verfahren gemäß mancher Ausführungsbeispiele.
Fig. 3 zeigt Beispiele für Signale zur Veranschaulichung von Ausführungsbeispielen.
Fig. 4 zeigt eine Treiberschaltung mit Kollisionserkennung, wie sie in manchen Ausführungsbeispielen verwendet wird.
Fig. 5 zeigt ein Diagramm eines Systems gemäß einem weiteren Ausführungsbeispiel.
Fig. 6 zeigt ein Diagramm eines Systems gemäß einem weiteren Ausführungsbeispiel.
Fig. 7 zeigt Beispielsignale zur Veranschaulichung mancher Ausführungsbeispiele.

### DETAILLIERTE BESCHREIBUNG

Im Folgenden werden verschiedene Ausführungsbeispiele detailliert erläutert. Diese Ausführungsbeispiele dienen lediglich der Veranschaulichung und sind nicht als einschränkend auszulegen. So können in den beschriebenen Ausführungsbeispielen Merkmale oder Komponenten durch alternative Merkmale oder Komponenten ersetzt werden oder auch weggelassen werden. Zusätzlich zu den beschriebenen Merkmalen und Komponenten können auch weitere Merkmale oder Komponenten vorhanden sein.

Insbesondere beziehen sich die nachfolgend beschriebenen Ausführungsbeispiele primär auf eine Adressvergabe an Slaveeinrichtungen eines Bussystems bei einer Initialisierung. Andere Merkmale des Kommunikationssystems wie beispielsweise Einzelheiten der Signalisierung, verwendete Protokolle und dergleichen, können in jeder herkömmlichen für Bussysteme bekannten Weise implementiert sein und werden daher nicht speziell erläutert. Beispielsweise kann die Kommunikation bei manchen Ausführungsbeispielen über einen CAN-Bus stattfinden, und abgesehen von der beschriebenen Adressvergabe und damit verknüpfter Merkmale und Komponenten kann die Kommunikation wie bei einer herkömmlichen Kommunikation über einen CAN-Bus erfolgen.

Merkmale und Komponenten verschiedener Ausführungsbeispiele können kombiniert werden. So können beispielsweise Variationen und Abwandlungen, die für eines der Ausführungsbeispiele beschrieben werden, auch auf andere Ausführungsbeispiele angewendet werden und werden daher nicht wiederholt erläutert.

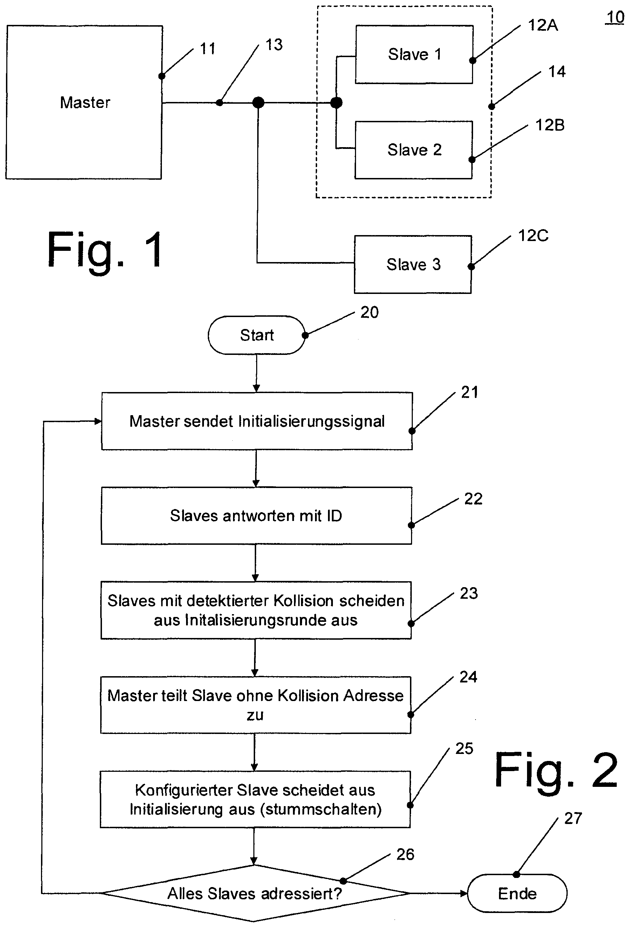

Die Fig. 1 zeigt ein Blockdiagramm eines Systems 10 gemäß einem Ausführungsbeispiel. Das System der Fig. 10 umfasst eine Mastereinrichtung 11 und mehrere Slaveeinrichtungen 12, die über einen Bus 13 verbunden sind. Als Beispiel sind drei Slaveeinrichtungen 12A, 12B, 12C dargestellt. Die Anzahl von drei Slaveeinrichtungen 12 dient dabei lediglich als Beispiel, und es kann auch eine andere Anzahl von Slaveeinrichtungen bereitgestellt sein. Der Bus 13 kann ein beliebiger drahtgebundener Bus sein, beispielsweise ein CAN-Bus, ein FlexRay-Bus oder dergleichen. Der Bus 13 kann in verschiedenen Konfigurationen bereitgestellt sein, beispielsweise einer Sternkonfiguration, einer anderen verzweigten Konfiguration wie der dargestellten Komponente, einer Daisy Chain-Konfiguration und dergleichen.

In manchen Ausführungsbeispielen können, wie später näher erläutert werden wird, auch mehrere Slaveeinrichtungen in einem Cluster angeordnet sein. Als Beispiel sind die Slaves 12A und 12B in einem Cluster 14 angeordnet, das einen einzigen Anschluss für den Bus 13 aufweist. Dabei kann eine Umsetzung von dem Bus 13 auf eine andere Kommunikation innerhalb des Clusters 14 erfolgen. Beispiele hierfür werden ebenfalls später näher erläutert.

Bei manchen Ausführungsbeispielen sind die Slaveeinrichtungen 12 Sensoren, und die Mastereinrichtung 11 ist eine Steuereinheit. Bei manchen Ausführungsbeispielen ist das System 10 in einem Fahrzeug, beispielsweise einem Kraftfahrzeug, angeordnet. In diesem Fall können die Slaveeinrichtungen 12 beispielsweise Sensoren des Kraftfahrzeuges sein. Die Mastereinrichtung kann auch kurz als Master bezeichnet werden, und Slaveeinrichtungen können kurz als Slaves bezeichnet werden.

In einer Initialisierungsphase des Systems 10 vergibt die Mastereinrichtung 11 Adressen an die Slaveeinrichtungen 12, um diese jeweils separat adressieren zu können, beispielsweise um im Fall von Sensoren einzelne Sensoren gezielt auslesen oder ansteuern zu können. Ein Verfahren für eine derartige Adressvergabe gemäß manchen Ausführungsbeispielen wird nunmehr unter Bezugnahme auf Fig. 2 erläutert. Das Verfahren der Fig. 2 kann beispielsweise in dem System 10 der Fig. 1 oder nachfolgenden Systemen durchgeführt werden, und wird zum besseren Verständnis unter Bezugnahme auf die Fig. 1 beschrieben. Das Verfahren der Fig. 2 kann aber auch in anderen Systemen durchgeführt werden.

Das Verfahren der Fig. 2 beginnt bei 20. Bei 21 sendet eine Mastereinrichtung, beispielsweise die Mastereinrichtung 11 auf Fig. 1, ein Initialisierungssignal über den Bus, beispielsweise den Bus 13 der Fig. 1. Das Initialisierungssignal signalisiert den Slaveeinrichtungen, beispielsweise den Slaveeinrichtungen 12 der Fig. 1, dass die Initialisierung nunmehr beginnt. Das Initialisierungssignal kann jede vorbestimmte Signalfolge, beispielsweise eine vorbestimmte Abfolge von Werten, die einer logischen 0, und Werten, die einer logischen 1 entsprechen, sein, die es den Slaveeinrichtungen ermöglicht, zu erkennen, dass nunmehr die Initialisierung beginnen soll.

Die Slaveeinrichtungen 12 weisen alle eine vorbestimmte Identifizierung (Identifizierung) auf, die beispielsweise bei der Herstellung einprogrammiert wurde. Bei manchen Ausführungsbeispielen kann eine eindeutige 32 Bit-Sequenz verwendet werden, wobei auch andere Sequenzlängen möglich sind. Eine mögliche Anzahl verschiedener Identifizierungen wird dabei so gewählt, dass jeder hergestellten Slaveeinrichtung eine eindeutige Identifizierung zugeordnet werden kann. Für verschiedene Hersteller von Slaveeinrichtungen können dabei verschiedene Bereiche von Identifizierungen reserviert werden.

Bei 22 antworten alle Slaves gleichzeitig mit der ihnen zugeordneten Identifizierung. Beispielsweise senden alle Slaves die ihnen jeweils zugeordnete Bitfolge.

Dabei wird bei Ausführungsbeispielen ein Kommunikationsprotokoll verwendet, welches zwei mögliche Pegel auf dem Bus aufweist, die einer logischen 0 und einer logischen 1 zugeordnet sind. Einer der Pegel ist dabei gegenüber dem anderen Pegel dominant, das heißt wenn verschiedene Busteilnehmer verschiedene Pegel treiben, "gewinnt" der dominante Pegel. Bei CAN-Bussen kann dies beispielsweise realisiert sein, indem einer der Pegel aktiv getrieben wird (in diesem Fall eine Spannungsdifferenz zwischen den Busleitungen über einen Schwellenwert entsprechend einer logischen 0), während der andere Wert einer Spannungsdifferenz bei oder nahe 0 entspricht, welche sich durch eine Verbindung der Busleitungen über einen Widerstand passiv einstellt und einer logischen 1 entspricht. Bei dieser Zuordnung ist die logische 0 dominant gegenüber der logischen 1. Im Rahmen dieser Anmeldung wird auch davon gesprochen, dass eine Slaveeinrichtung einen Pegel auf einen Bus "setzt". Dies kann je nach Implementierung durch ein aktives Treiben oder auch durch ein "einstellen lassen", indem die Slaveeinrichtung passiv ist und sich beispielsweise der Pegel über einen Widerstand ohne aktives Treiben einstellt, geschehen.

Bei 23 detektieren die Slaveeinrichtungen eine Kollision auf dem Bus. Eine Kollision liegt aus Sicht einer Slaveeinrichtung vor, wenn der auf dem Bus vorliegende Wert, z.B. Spannungspegel nicht der von ihm gesendeten Identifizierung entspricht. In dem obigen Ausführungsbeispiel mit dominanten und rezessiven Zuständen tritt dies auf, wenn ein anderer Slave eine "dominantere" Identifizierung sendet als der Slave, der eine Kollision erkennt.

Diejenigen Slaveeinrichtungen, die eine Kollision detektieren, scheiden dann bei 23 aus der vorliegenden "Initialisierungsrunde", das heißt der Schleife der Figur 2, die gerade durchlaufen wird, aus. Eine der Slaveeinrichtungen wird dabei keine Kollision detektieren (z.B. weil während des Sendens der Identifizierungen nie eine andere Slaveeinrichtung einen "dominanteren" Pegel treibt). Dieser Slaveeinrichtung teilt die Mastereinrichtung dann bei 24 eine Adresse zu. Diese Slaveeinrichtung ist somit hinsichtlich der Adresse konfiguriert und scheidet bei 25 aus der Initialisierung aus, z.B. indem sie stumm geschaltet wird.

Bei 26 wird überprüft, ob alle Slaveeinrichtungen eine Adresse erhalten haben. Ist dies der Fall, endet das Verfahren bei 27, ansonsten springt das Verfahren für die nächste Initialisierungsrunde zunächst zu 21.

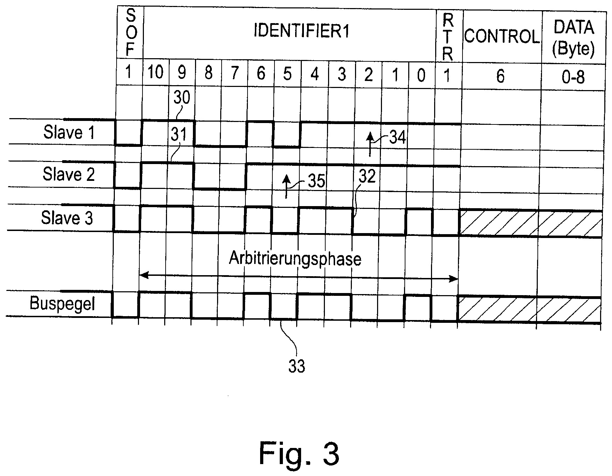

Ein Beispiel für eine solche Kollisionserkennung wird nun unter Bezugnahme auf die Fig. 3 kurz erläutert. In der Fig. 3 dargestellte Signale dienen dabei lediglich als einfaches Beispiel zur besseren Veranschaulichung und sind nicht als einschränkend auszulegen, da je nach Implementierung Signalformen voneinander abweichen können.

In Fig. 3 wird von einer Situation ausgegangen, in der ein niedriger Buspegel dominant und ein hoher Buspegel rezessiv ist, sodass, wenn ein Teilnehmer einen niedrigen Buspegel und ein anderer Teilnehmer einen hohen Buspegel senden will, der Buspegel insgesamt niedrig ist. Dies ist beispielsweise bei einem CAN-Bus der Fall.

Bei dem Beispiel der Fig. 3 wird von drei Slaveeinrichtungen (in Fig. 1 mit Slave 1, Slave 2, Slave 3 bezeichnet) ausgegangen. Von dem Slave 1 gesendete Daten sind durch eine Kurve 30 veranschaulicht, von dem Slave 2 gesendete Daten sind durch eine Kurve 31 veranschaulicht und die von einem Slave 3 gesendeten Daten sind durch eine Kurve 32 veranschaulicht. Eine Kurve 33 zeigt den Pegel auf einem Bus.

Nach dem Erhalt des Initialisierungssignals (beispielsweise bei 21 der Fig. 2) beginnen alle Teilnehmer, ihre Identifizierung zu senden. Diese Phase wird auch als Arbitrierungsphase bezeichnet. Bei dem Beispiel von Fig. 3 erfolgt dies zunächst mit einem ersten Bit, welches den Beginn eines Datenrahmens anzeigt (SOF, start of frame), bei dem alle Slaveeinrichtungen den Bus auf einen niedrigen Pegel ziehen. Der Buspegel ist daher hier niedrig. Dann senden alle Teilnehmer ihre Identifizierung, welche bei dem Beispiel der Fig. 3 11 Bits umfasst. Dabei wird bei dem Beispiel der Fig. 3 mit dem höchstwertigsten Bit Nummer 10 begonnen, bis zum niedrigstwertigsten Bit 0.

Der Fachmann wird unmittelbar erkennen, dass bei einem CAN Bus die Arbitrierung dazu führt, dass für die niedrigste Identifizierung eine maximale Priorisierung des Buszugriffsverfahrens realisiert wird, wie im Folgenden auch erläutert wird. Der Teilnehmer mit der höchsten Priorität (dargestellt durch eine dominante Adresse) setzt sich gegen alle anderen Teilnehmer durch und darf senden. Dieses Verfahren wird auch als CSMA-CR (Carrier Sense Multiple Access - Collision Resolution) bezeichnet und hier dazu benutzt, die Adressvergabe durchzuführen. Es ist also möglich, abgestufte Prioritäten für einzelne Teilnehmer zu vergeben.

In dem Beispiel der Fig. 3 beginnt für alle Slaveeinrichtungen die Adresse 1 mit der Bitfolge 11001, das heißt für die Bits 10 und 9 senden die Slaveeinrichtungen einen hohen Pegel, für die Bits 8 und 7 einen niedrigen Pegel und für das Bit 6 wieder auf einen hohen Pegel. Dementsprechend ist auch der Bus für die Bits 10 und 9 auf einem hohen Pegel, für die Bits 8 und 7 auf einem niedrigen Pegel und für das Bit 6 wieder auf einem hohen Pegel.

Die Identifizierung von Slave 1 und Slave 3 setzt sich bei Bit 5 mit einer 0 entsprechend einem niedrigen Pegel fort, während sich für den Slave 2 die Identifizierung mit einer 1, das heißt einem hohen Pegel, fortsetzt. Da wie oben erwähnt in dem Beispiel der Fig. 3 der niedrige Pegel dominant ist, ist der Buspegel bei Bit 5 niedrig. Der Slave 2 kann somit bei 35, das heißt beim Bit 5, eine Kollision erkennen, da der Buspegel nicht seiner gesendeten Identifizierung entspricht. Der Slave 2 scheidet somit aus, wie für 23 bei Fig. 2 erläutert. In diesem Beispiel bleibt der Slave 2 auf dem rezessiven Zustand, das heißt dem hohen Pegel.

Die Identifizierung von Slave 1 und 3 setzt sich bei den Bits 4 und 3 mit der Bitfolge 11, das heißt hohem Pegel, fort, und auch der Buspegel ist hoch. Beim nächsten Bit (Bit 2) ist der Bitwert für den Slave 1 gleich 1 (hoher Pegel) und für den Slave 3 niedrig (niedriger Pegel). Der Buspegel ist somit niedrig, und wie durch einen Pfeil 34 angedeutet, erkennt nun der Slave 1 eine Kollision (niedriger Buspegel, während er einen hohen Buspegel entsprechend dem Bit 1 senden will) und scheidet ebenso aus. Der Slave 3 hat somit diese Runde "gewonnen" und sendet seine vollständige Identifizierung (0 beim Bit 1 und 1 beim Bit 0), gefolgt von einem Abschlussbit (RPR) mit einem Wert 0.

Darauffolgend wird dem Slave 3, bei dem als einziger keine Kollision festgestellt wird, mittels Steuerdaten (control) und Datenbytes (data) eine Adresse zugewiesen (entsprechend 24 der Fig. 2). Für die nächste Runde wird dann der Slave 3 stumm geschaltet, und nur noch die Slave 1 und 2 senden ihre Identifizierungen. In diesem Fall wird als nächstes der Slave 1 gewinnen, da der Slave 2 wiederum bei 35 eine Kollision erkennen wird. Als letztes wird dann dem Slave 2 eine Adresse zugeordnet. Wie zu erkennen ist, "gewinnt" bei der in Fig. 3 dargestellten Herangehensweise , bei der die 0 dominant ist und das höchstwertige Bit zuerst gesendet wird, immer die Slaveeinrichtung mit der niedrigsten Identifizierung. Bei anderen Ausführungsbeispielen kann auch das niederwertigste Bit zuerst gesendet werden, wobei dann nicht automatisch die niedrigste Adresse "gewinnt".

Auch wenn die Identifizierung in Fig. 3 als 11-Bit-Werte (Bits 0 bis 10) gezeigt ist, können auch mehr oder weniger Bits verwendet werden. Bei manchen Ausführungsbeispielen kann beispielsweise ein 32-Bit-Wert verwendet werden, was über 4.000.000.000 mögliche Identifizierungen ergibt. Verschiedenen Herstellern von Slaveeinrichtungen können dabei verschiedene Bereiche von Identifizierungen zugeordnet werden, die sie für ihre Produkte verwenden können. Hier kann ein Teil der Bits mit einem Code belegt werden, der den Hersteller angibt.

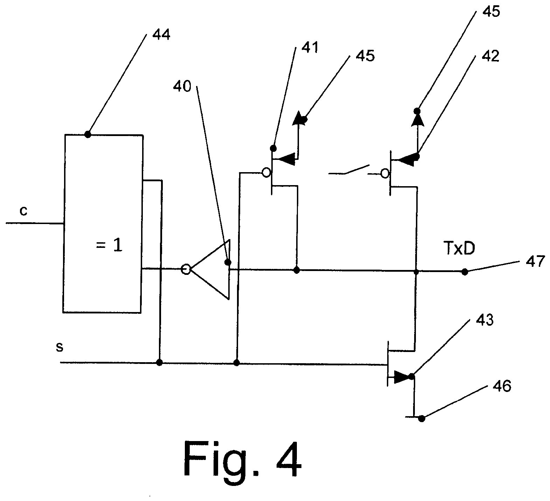

Im Folgenden werden verschiedene Möglichkeiten zur Kollisionsdetektion und entsprechende Systeme noch näher erläutert. Die Fig. 4 zeigt eine Sende- und Kollisionsdetektionsschaltung mit Kollisionsdetektion über eine Sendeleitung TxD, auf der ein Sendesignal von einer Slaveeinrichtung gesendet wird, insbesondere die Identifizierung. Das Sendesignal kann dann durch einen Leitungstreiber (line driver) auf ein Bussignal umgesetzt werden.

Bei der Schaltung der Fig. 4 ist ein PMOS-Transistor 42 zwischen einem Sendeanschluss 47 und eine positive Versorgungsspannung 45 geschaltet, und ein NMOS-Transistor 43 ist zwischen den Sendeanschluss 47 und Masse 46 geschaltet. Im normalen Betrieb (nach der oben beschriebenen Initialisierungsphase) dient der PMOS-Transistor 42 als Push-Transistor und NMOS-Transistor 43 als Pull-Transistor, um den Sendeanschluss 47 wahlweise auf die positive Versorgungsspannung 45 oder Masse 46 zu legen. Beispielsweise kann die positive Versorgungsspannung 45 einer logischen 1 und Masse 46 einer 0 entsprechen. Dabei weist der Transistor 42 ein ähnliches Verhalten, beispielsweise durch entsprechende Dimensionierung, wie der Transistor 43 auf, sodass in diesem Fall Push-Transistor und Pull-Transistor näherungsweise gleich stark sind, d.h. eine ähnliche Stromtreibfähigkeit aufweisen.

Für das Senden der Identifizierung während der Initialisierungsphase wird statt dem PMOS-Transistor 42 ein PMOS-Transistor 41 verwendet, welcher ebenfalls zwischen die positive Versorgungsspannung 45 und den Sendeausgang 47 geschaltet ist. Der PMOS-Transistor 41 ist schwächer dimensioniert als der PMOS-Transistor 42, das heißt mit geringerer Stromleitfähigkeit und/oder höherem Widerstand Ron in eingeschaltetem Zustand. Dies bedeutet, dass beim Senden der Identifizierungen der als Push-Transistor dienende PMOS-Transistor 45 schwächer ist als der als Pull-Transistor dienende NMOS-Transistor 43. Wenn nun eine Sendeschaltung wie in Fig. 4 gezeigt während der Identifizierung eine logische 1 entsprechend einem hohen Pegel der Versorgungsspannung 45 sendet (durch Schließen des Transistors 45 und Öffnen des Transistors 43) und ein anderer Slave mittels einer derartigen Sendeschaltung eine logische 0 entsprechend dem niedrigen Pegel der Masse 46 sendet (durch Schließen des entsprechenden Transistors 43 und Öffnen des Transistors 41), liegt auf der Sendeleitung TxD insgesamt eine logische 0 entsprechend dem Massepegel vor (da der hier verwendete Transistor 45 schwächer ist). In demjenigen Slave, der die logische 1 sendet, wird dies mittels einer Kollisionsdetektionsschaltung 40, 44 als Kollision erkannt. Insbesondere wird durch einen Inverter 40 einem Logikgatter 44 eine invertierte Version des Signals auf der Liste Sendeleitung TxD sowie ein Steuersignal s, welches zum Steuern der Transistoren 41,43 dient, zugeführt. Das Logikgatter 44 stellt dann fest, ob der Pegel auf der Sendeleitung TxD dem anhand des Steuersignals s beabsichtigten Pegel entspricht.

Insbesondere steuert im Falle einer Kollision das Signal s den Transistor 41 an, geschlossen zu sein und den Transistor 43 an, geöffnet zu sein, und an dem Sendeausgang 47 liegt dennoch eine niedrige Spannung entsprechend Massepotenzial vor. In diesem Fall gibt das Logikgatter 44 ein entsprechendes Kollisionssignal c aus.

Zu bemerken ist, dass grundsätzlich bei anderen Ausführungsformen auch eine umgekehrte Logik, mit einem schwächeren Pull-Transistor, der während der Initialisierung den Transistor 43 ersetzt, möglich ist.

Das Unterscheiden zwischen der Initialisierungsphase und einer späteren Betriebsphase, in der dann der Transistor 42 verwendet wird, kann beispielsweise mittels eines Adressflags in einer Slaveeinrichtung erfolgen. Sobald der Slaveeinrichtung eine Adresse zugeteilt wurde, wird das Adressflag gesetzt, und der Transistor 42 wird statt des Transistors 41 verwendet.

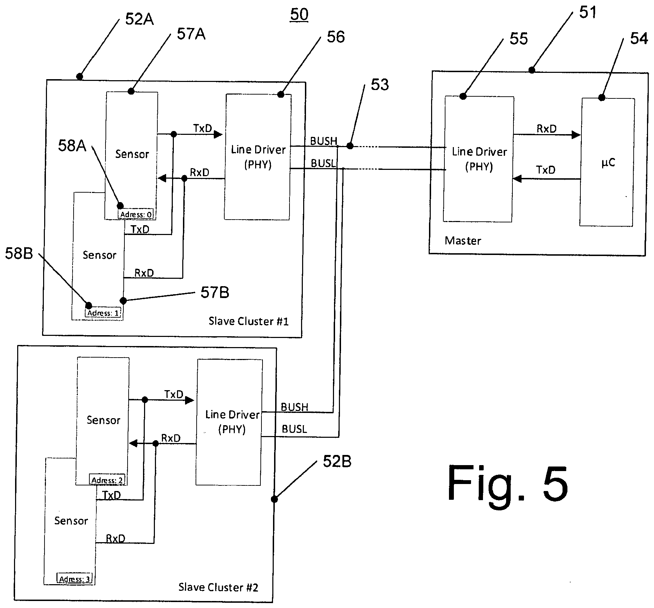

Die Sende- und Kollisionsdetektionsschaltung der Fig. 4 kann insbesondere in Fällen verwendet werden, in denen mehrere Slaveeinrichtungen in einem Cluster angeordnet sind, die einen einzigen Leitungstreiber für einen Bus, beispielsweise einen CAN-Bus, teilen. Ein Beispiel für ein derartiges System 50 ist in Fig. 5 dargestellt.

Das System 50 der Fig. 5 umfasst eine Mastereinrichtung 51 und mehrere Slavecluster 52, von denen ein erstes Slavecluster 52A und ein zweites Slavecluster 52B dargestellt ist. Die Anzahl von zwei Slaveclustern 52A, 52B ist dabei nur als Beispiel zu verstehen, und es kann auch nur ein Slavecluster oder es können mehr als zwei Slavecluster bereitgestellt sein. Die Slavecluster 52 können beispielsweise jeweils auf einem einzigen Chip implementiert sein.

Die Mastereinrichtung 51 ist mit den Slaveclustern 52 über einen Bus 53 verbunden. Im Beispiel der Fig. 5 ist der Bus 53 ein CAN-Bus mit zwei Leitungen BusH, BusL.

Die Mastereinrichtung 51 weist eine Mikrosteuerung 54 (microcontroller, MC) und einen Leitungstreiber (line driver) 55 zum Treiben der Leitungen BusH, BusL des Busses 53 auf. Die Mikrosteuerung 54 sendet zu sendende Daten über eine Sendeleitung TxD und Empfang an den Leitungstreiber 55 und empfängt empfangene Daten über eine Empfangsleitung RxD von dem Leitungstreiber. Die gesendeten Daten umfassen dabei das bei 21 in Fig. 2 gesendete Initialisierungssignal sowie die bei 24 in Fig. 2 zugeteilte Adresse, und die empfangenen Daten umfassen die von den Slaveeinrichtungen gesendeten Identifizierungen.

In dem Ausführungsbeispiel der Fig. 2 sind die Slavecluster 52A und 52B im Wesentlichen gleich ausgestaltet. Daher wird im Folgenden nur der Slavecluster 52A detailliert beschrieben, und die Ausführungen gelten für den Slavecluster 52A entsprechend. Bei anderen Ausführungen können verschiedene Slavecluster auch verschieden ausgestaltet sein, beispielsweise unterschiedliche Anzahlen oder Typen von Slaveeinrichtungen umfassen.

Der Slavecluster 52A weist einen Leitungstreiber 56 zur Kommunikation über den Bus 53 sowie eine Anzahl von Sensoren 57 auf, die als Beispiel für Slaveeinrichtungen dienen. In dem Beispiel der Fig. 5A umfasst der Slavecluster 52A einen ersten Sensor 57A und einen zweiten Sensor 57B. In anderen Ausführungsbeispielen können auch mehr als zwei Sensoren 57 bereitgestellt sein. Die Sensoren 57A und 57B kommunizieren mit dem Leitungstreiber 56 über eine Sendeleitung TxD und eine Empfangsleitung RxD. Über die Sendeleitung TxD werden beispielsweise über den Bus 53 zu sendende Daten übertragen, wie die oben erläuterte Identifizierung. Über die Empfangsleitung RxD werden Daten über den Bus 53 empfangen, beispielsweise das Initialisierungssignal, welches die Mastereinrichtung 51 bei 21 der Fig. 2 sendet, sowie die zugeteilte Adresse (24 der Fig. 2).

Senden die Sensoren 57A, 57B verschiedene Pegel auf der Sendeleitung TxD, kann dies wie unter Bezugnahme auf Fig. 4 erläutert mit der dortigen Sende-und Kollisionsdetektionsschaltung erkannt werden. Für Slaves verschiedener Slavecluster 52 wird die Kollisionserkennung ebenso durchgeführt, wobei über die Leitungstreiber 56 der Slavecluster 52 der entsprechende Pegel, den ein Slave eines Slaveclusters sendet, auch auf die Sendeleitungen TxD der anderen Slavecluster 52 (im Beispiel der Fig. 5 mit zwei Slaveclustern des anderen Slaveclusters) übertragen wird.

Die mit dem hier diskutierten Verfahren zugeteilten Adressen werden dann in jeweiligen Adressregistern 58A, 58B der Sensoren 57A, 57B gespeichert.

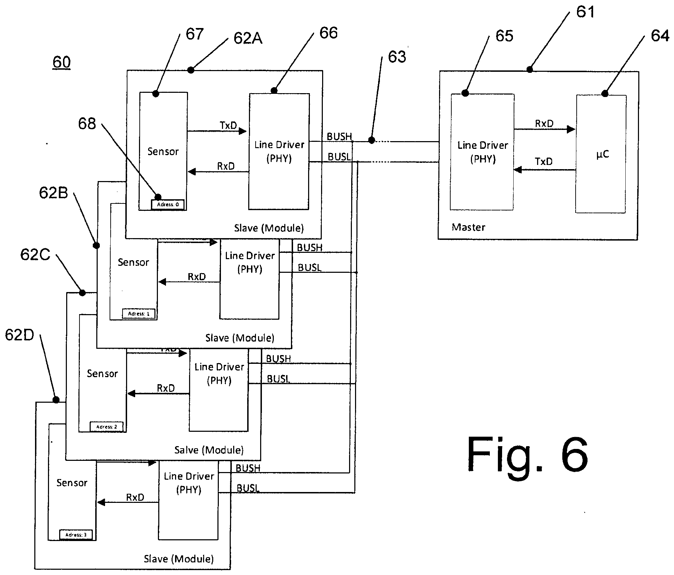

Bei anderen Ausführungsbeispielen kann eine Kollisionsdetektion durch eine Rückkopplungsfunktion erfolgen, in dem das an den Bus gesendete Sendesignal auf Empfangsleitungen rückgekoppelt wird. Die Kollisionsdetektion kann dann durch einen Vergleich des gesendeten Signals mit dem Signal auf der Empfangsleitung erfolgen. Ein Beispielsystem hierfür ist in Fig. 6 dargestellt.

Ein System 60 der Fig. 6 umfasst eine Mastereinrichtung 61 und eine Vielzahl von Slaveeinrichtungen 62, von denen als Beispiel vier Slaveeinrichtungen 62A, 62B, 62C und 62D dargestellt sind. Die Slaveeinrichtungen 62 sind mit der Mastereinrichtung 61 über einen Bus 63 verbunden, welcher im Beispiel der Fig. 6 als Zwei-Draht-Bus mit zwei Busleitungen BusH, BusL, insbesondere als CAN-Bus, ausgestaltet ist.

Die Mastereinrichtung 61 weist eine Mikrosteuerung 64 und einen Leitungstreiber 65 auf, welche wie die Mikrosteuerung 54 unter Leitungstreiber 55 der Mastereinrichtung 51 der Fig. 5 arbeiten und daher nicht nochmals detailliert beschrieben werden.

In dem System 60 sind die Slaveeinrichtungen 62A bis 62D gleich ausgestaltet. Daher wird im Folgenden nur die Slaveeinrichtung 62A näher erläutert, und die Beschreibung gilt für die Slaveeinrichtungen 62B bis 62D entsprechend. Bei anderen Ausführungsbeispielen können die Slaveeinrichtungen auch unterschiedlich ausgestaltet sein.

Die Slaveeinrichtung 62A umfasst einen Leitungstreiber 66 und einen Sensor 67. Bei anderen Ausführungen können statt des Sensors 67 auch andere Komponenten bereitgestellt sein.

Der Sensor 67 sendet zusendende Signale über eine Sendeleitung TxD an den Leitungstreiber 66 und empfängt Empfangssignale über eine Empfangsleitung RxD von dem Leitungstreiber 66, der entsprechend Signale zwischen den Bus 63 und den Leitungen TxD, RxD umsetzt. Insbesondere sendet der Sensor 67 in Antwort auf ein Initialisierungssignal wie bei 21 der Fig. 2 seine Identifizierung (bei 22 in Fig. 2) und empfängt, wenn er keine Kollision detektiert, eine ihm zugewiesene Adresse (zum Beispiel bei 24 der Fig. 2). Diese Adresse wird dann in einem Adressregister 68 gespeichert.

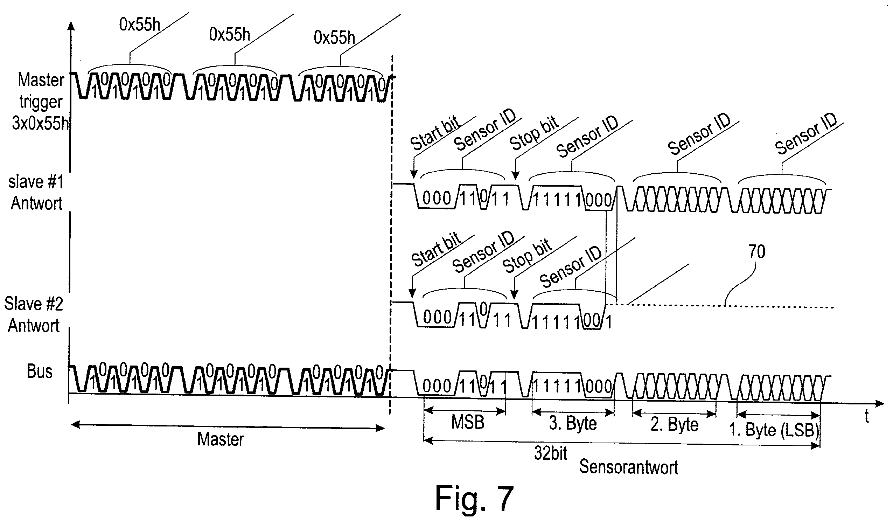

Zur Kollisionsdetektion wird während der Initialisierungsphase beim Senden der Identifizierung der entsprechende Wert auf dem Bus 63 als Empfangssignal auf die Empfangsleitung RxD zurückgeschleift. Durch einen Vergleich eines Sendesignals auf der Sendeleitung TxD mit diesem Empfangssignal kann eine Kollision detektiert werden, wenn das Empfangssignal von dem Sendesignal abweicht (wenn beispielsweise der Sensor 67 einen rezessiven Wert sendet und ein anderer Sensor einen dominanten Wert). Auf diese Weise können Kollisionen detektiert werden. Dabei wird eine Sendegeschwindigkeit beim Senden der Identifizierung so gewählt, dass auch bei einer Schleifenverzögerung bei dem Zurückschleifen einer Kollisionsdetektion erfolgen kann. Diese Verzögerung hängt z.B. von der verwendeten Leistungslänge ab. Wiederum ist zu bemerken, dass die Signale der Fig. 7 nur ein Beispiel sind und nicht als einschränkend anzusehen sind.

Zur weiteren Veranschaulichung zeigt die Fig. 7 ein detaillierteres Beispiel von Signalen, wie sie beispielsweise in dem System von der Fig. 6 vorliegen können. Zur Vereinfachung werden dabei die Signale für eine Mastereinrichtung und zwei Slaveeinrichtungen dargestellt.

Im Beispiel von Fig. 7 sendet die Mastereinrichtung (beispielsweise die Mastereinrichtung 51 der Fig. 5 oder die Mastereinrichtung 61 der Fig. 6) zunächst ein Initialisierungssignal (beispielsweise bei 21 der Fig. 2). Bei dem Beispiel der Fig. 7 wird als Initialisierungssignal dreimal der Hexadezimalwert 0x55h entsprechend 3 Bytes abwechselnd mit Werten 1 und 0 gesendet, jeweils getrennt durch einen Start-/Stoppbit. Durch die dreimalige Wiederholung wird eine Redundanz erzeugt, falls ein Slave das Initialisierungssignal nicht beim ersten Mal korrekt identifiziert. Es kann jedoch auch jede andere Bitfolge, welche eindeutig von den Slaveeinrichtungen als Initialisierungssignal identifiziert werden kann, verwendet werden. Während dieser Phase, in Fig. 7 mit Master bezeichnet, liegt dann ein entsprechendes Signal auf dem Bus vor.

Nach dem Abschluss des Initialisierungssignals antworten die Slaveeinrichtungen mit ihren Identifizierungen. Diese beginnen mit einem Startbit gefolgt von einer 4 Byte (32 Bit) langen Identifizierung, wobei die 4 Bytes voneinander durch ein Stoppbit getrennt sind. In dem Beispiel der Fig. 7 ist das 1. Byte mit den höchstwertigen Bits (MSB) für beide Slaveeinrichtungen 00011011, sodass hier keine Kollision vorliegt. Das nächste Byte der Identifizierung (in Fig. 7 als 3. Byte bezeichnet) ist für den ersten Slave 11111000 und für den zweiten Slave 11111001, sodass beim letzten Bit eine Kollision vorliegt. Wieder wird davon ausgegangen, dass die 0 gegenüber der 1 dominant ist, sodass hier ein Pegel entsprechend einer 0 auf dem Bus vorliegt. Der zweite Slave erkennt somit eine Kollision (er will eine 1 auf den Bus treiben, der Bus zeigt aber eine 0) und scheidet somit aus und schaltet stumm, beispielsweise auf den rezessiven Zustand. Dies ist in Fig. 7 mit dem Bezugszeichen 70 gekennzeichnet.

Der erste Slave fährt fort, seine Identifizierung zu senden (in Fig. 7 mit 2. Byte und 1. Byte bezeichnet) und bekommt dann seine Adresse zugewiesen, wie dies bereits erläutert wurde. Der erste Slave scheidet dann in der nachfolgenden Runde aus, sodass dann im Falle von zwei Slaveeinrichtungen wie in Fig. 7 der zweiten Slaveeinrichtung eine Adresse zugewiesen wird.

Somit kann mit den hier diskutierten Ausführungsbeispielen eine Adressvergabe an eine Vielzahl von Slaves erfolgen, wobei durch eine Kollisionsdetektion sichergestellt wird, dass immer nur ein Slave eine Identifizierung erhält.

## Patentansprüche

1. Verfahren, umfassend:
in einer Slaveeinrichtung (12A, 12B, 12C; 57A, 57B; 62A, 62B, 62C, 62D),
- Empfangen eines Initialisierungssignals,
- in Antwort auf das Initialisierungssignal, Senden einer Identifizierung der Slaveeinrichtung (12A, 12B, 12C; 57A, 57B; 62A, 62B, 62C, 62D) über einen Bus (13; 53; 63),
**dadurch gekennzeichnet, dass** das Verfahren weiter umfasst:
- Prüfen, ob beim Senden der Initialisierungsidentifizierung eine Kollision auf dem Bus (13; 53; 63) auftritt,
- wenn eine Kollision auftritt, Setzen der Slaveeinrichtung (12A, 12B, 12C; 57A, 57B; 62A, 62B, 62C, 62D) in einen inaktiven Zustand, und
- wenn keine Kollision auftritt, Empfangen einer Adresse für die Slaveeinrichtung (12A, 12B, 12C; 57A, 57B; 62A, 62B, 62C, 62D) nach dem Senden der Identifizierung.

2. Verfahren nach Anspruch 1, wobei das Prüfen, ob eine Kollision auf dem Bus (13; 53; 63) vorliegt, umfasst, festzustellen, dass eine Kollision vorliegt, wenn ein Pegel auf dem Bus (13; 53; 63) nicht einem auf Basis der gesendeten Identifizierung erwarteten Wert entspricht.

3. Verfahren nach Anspruch 1 oder 2, wobei der Bus (13; 53; 63) einen dominanten Pegel oder einen rezessiven Pegel aufweist, und wobei eine Kollision auf dem Bus (13; 53; 63) vorliegt, wenn beim Senden der Identifizierung der rezessive Pegel auf dem Bus (13; 53; 63) von der Slaveeinrichtung (12A, 12B, 12C; 57A, 57B; 62A, 62B, 62C, 62D) gesetzt wird und auf dem Bus (13; 53; 63) der dominante Pegel vorliegt.

4. Verfahren nach Anspruch 3, wobei das Verfahren ein Senden einer weiteren Identifizierung durch eine weitere Slaveeinrichtung (12A, 12B, 12C; 57A, 57B; 62A, 62B, 62C, 62D) in Antwort auf das Initialisierungssignal umfasst, und wobei die Kollision auf dem Bus (13; 53; 63) vorliegt, wenn die weitere Slaveeinrichtung (12A, 12B, 12C; 57A, 57B; 62A, 62B, 62C, 62D) den dominanten Pegel auf dem Bus (13; 53; 63) setzt.

5. Verfahren nach einem der Ansprüche 1 bis 4, wobei das Prüfen, ob eine Kollision auf dem Bus (13; 53; 63) vorliegt, auf Basis eines Signals auf einer Sendeleitung (TxD) der Slaveeinrichtung (12A, 12B, 12C; 57A, 57B; 62A, 62B, 62C, 62D) erfolgt.

6. Verfahren nach einem der Ansprüche 1 bis 5, wobei die Slaveeinrichtung (12A, 12B, 12C; 57A, 57B; 62A, 62B, 62C, 62D) in einem Slavecluster (52A, 52B) angeordnet ist, in dem sich mehrere Slaveeinrichtungen (12A, 12B, 12C; 57A, 57B; 62A, 62B, 62C, 62D) eine Busschnittstelle (56) teilen.

7. Verfahren nach Anspruch 5 oder 6, wobei die Slaveeinrichtung (12A, 12B, 12C; 57A, 57B; 62A, 62B, 62C, 62D) zum Senden der Identifizierung einen Push-Pull-Treiber benutzt, wobei ein Push-Transistor oder Push-Pull-Transistor des Push-Pull-Treibers schwächer ist als der andere des Push-Transistors oder Pull-Transistors.

8. Verfahren nach einem der Ansprüche 1 bis 7, wobei das Prüfen, ob eine Kollision vorliegt, basierend auf einem Signal auf einer Empfangsleitung (RxD) der Slaveeinrichtung (12A, 12B, 12C; 57A, 57B; 62A, 62B, 62C, 62D) erfolgt.

9. Verfahren nach einem der Ansprüche 1 bis 8, weiter umfassend Senden des Initialisierungssignals durch eine Mastereinrichtung (11; 51; 61) und Senden der Adresse durch die Mastereinrichtung (11; 51; 61).

10. Verfahren nach einem der Ansprüche 1 bis 9, wobei das Verfahren mindestens so lange wiederholt wird, bis der Slaveeinrichtung (12A, 12B, 12C; 57A, 57B; 62A, 62B, 62C, 62D) eine Adresse zugewiesen wird.

11. Slaveeinrichtung (12A, 12B, 12C; 57A, 57B; 62A, 62B, 62C, 62D), umfassend:
eine Kommunikationsschaltung zum Senden von Signalen zu einem Bus (13; 53; 63) und zum Empfangen von Signalen von dem Bus (13; 53; 63), wobei die Slaveeinrichtung (12A, 12B, 12C; 57A, 57B; 62A, 62B, 62C, 62D) eingerichtet ist zum:
- Empfangen eines Initialisierungssignals,
**dadurch gekennzeichnet, dass** die Slaveeinrichtung weiter eingerichtet ist zum:
- in Antwort auf das Initialisierungssignal, Senden einer Identifizierung der Slaveeinrichtung (12A, 12B, 12C; 57A, 57B; 62A, 62B, 62C, 62D), über den Bus (13; 53; 63),
Prüfen, ob beim Senden der Identifizierung eine Kollision auf dem Bus (13; 53; 63) auftritt,
- wenn eine Kollision auftritt, Setzen der Slaveeinrichtung (12A, 12B, 12C; 57A, 57B; 62A, 62B, 62C, 62D) in einen inaktiven Zustand, und
- wenn keine Kollision auftritt, Empfangen einer Adresse für die Slaveeinrichtung (12A, 12B, 12C; 57A, 57B; 62A, 62B, 62C, 62D) nach dem Senden der Identifizierung.

12. Slaveeinrichtung (12A, 12B, 12C; 57A, 57B; 62A, 62B, 62C, 62D) nach Anspruch 11, wobei die Slaveeinrichtung (12A, 12B, 12C; 57A, 57B; 62A, 62B, 62C, 62D) zur Durchführung des Verfahrens nach einem der Ansprüche 2 bis 8 eingerichtet ist.

13. System (10; 50; 60), umfassend eine Slaveeinrichtung (12A, 12B, 12C; 57A, 57B; 62A, 62B, 62C, 62D) nach Anspruch 11 oder 12, und eine Mastereinrichtung (11; 51; 61), welche zum Senden des Initialisierungssignals und zum Senden der Adresse eingerichtet ist.

14. System (10; 50; 60) nach Anspruch 13, umfassend mehrere Slaveeinrichtungen (12A, 12B, 12C; 57A, 57B; 62A, 62B, 62C, 62D),
wobei die Mastereinrichtung (11; 51; 61) eingerichtet ist, nach dem Senden der Adresse erneut das Initialisierungssignal zu senden, bis allen Slaveeinrichtungen (12A, 12B, 12C; 57A, 57B; 62A, 62B, 62C, 62D) einer Adresse zugeordnet ist.

## Claims

1. A method comprising:
in a slave device (12A, 12B, 12C; 57A, 57B; 62A, 62B, 62C, 62D),
- receiving an initialization signal,
- in response to the initialization signal, transmitting an identification of the slave device (12A, 12B, 12C; 57A, 57B; 62A, 62B, 62C, 62D) via a bus (13; 53; 63),
**characterized in that** the method further comprises:
- checking whether a collision occurs on the bus (13; 53; 63) when transmitting the initialization identification,
- if a collision occurs, setting the slave device (12A, 12B, 12C; 57A, 57B; 62A, 62B, 62C, 62D) in an inactive state, and
- if no collision occurs, receiving an address for the slave device (12A, 12B, 12C; 57A, 57B; 62A, 62B, 62C, 62D) after transmitting the identification.

2. The method of claim 1, wherein checking whether a collision exists on the bus (13; 53; 63) comprises determining that a collision exists if a level on the bus (13; 53; 63) does not correspond to an expected value based on the transmitted identification.

3. The method of claim 1 or 2, wherein the bus (13; 53; 63) has a dominant level or a recessive level, and wherein a collision exists on the bus (13; 53; 63) if, when transmitting the identification, the recessive level is set on the bus (13; 53; 63) by the slave device (12A, 12B, 12C; 57A, 57B; 62A, 62B, 62C, 62D) and the dominant level is present on the bus (13; 53; 63).

4. The method of claim 3, wherein the method comprises transmitting a further identification by a further slave device (12A, 12B, 12C; 57A, 57B; 62A, 62B, 62C, 62D) in response to the initialization signal, and wherein the collision exists on the bus (13; 53; 63) if the further slave device (12A, 12B, 12C; 57A, 57B; 62A, 62B, 62C, 62D) sets the dominant level on the bus (13; 53; 63).

5. The method of any one of claims 1 to 4, wherein the checking whether a collision exists on the bus (13; 53; 63) is based on a signal on a transmit line (TxD) of the slave device (12A, 12B, 12C; 57A, 57B; 62A, 62B, 62C, 62D).

6. The method of any one of claims 1 to 5, wherein the slave device (12A, 12B, 12C; 57A, 57B; 62A, 62B, 62C, 62D) is located in a slave cluster (52A, 52B) in which multiple slave devices (12A, 12B, 12C; 57A, 57B; 62A, 62B, 62C, 62D) share a bus interface (56).

7. The method of claim 5 or 6, wherein the slave device (12A, 12B, 12C; 57A, 57B; 62A, 62B, 62C, 62D) uses a push-pull driver to transmit the identification, wherein one push transistor or push-pull transistor of the push-pull driver is weaker than the other one of the push transistor or pull transistor.

8. The method of any one of claims 1 to 7, wherein the checking whether a collision exists is based on a signal on a receive line (RxD) of the slave device (12A, 12B, 12C; 57A, 57B; 62A, 62B, 62C, 62D).

9. The method of any one of claims 1 to 8, further comprising transmitting the initialization signal by a master device (11; 51; 61) and transmitting the address by the master device (11; 51; 61).

10. The method of any one of claims 1 to 9, wherein the method is repeated at least until an address is assigned to the slave device (12A, 12B, 12C; 57A, 57B; 62A, 62B, 62C, 62D) .

11. A slave device (12A, 12B, 12C; 57A, 57B; 62A, 62B, 62C, 62D) comprising:
a communication circuit for transmitting signals to a bus (13; 53; 63) and for receiving signals from the bus (13; 53; 63), wherein the slave device (12A, 12B, 12C; 57A, 57B; 62A, 62B, 62C, 62D) is configured to:
- receive an initialization signal,
**characterized in that** the slave device is further configured to:
- in response to the initialization signal, transmit an identification of the slave device (12A, 12B, 12C; 57A, 57B; 62A, 62B, 62C, 62D) via the bus (13; 53; 63),
- check whether a collision occurs on the bus (13; 53; 63) when transmitting the identification,
- if a collision occurs, set the slave device (12A, 12B, 12C; 57A, 57B; 62A, 62B, 62C, 62D) in an inactive state, and
- if no collision occurs, receive an address for the slave device (12A, 12B, 12C; 57A, 57B; 62A, 62B, 62C, 62D) after transmitting the identification.

12. Slave device (12A, 12B, 12C; 57A, 57B; 62A, 62B, 62C, 62D) according to Claim 11, wherein the slave device (12A, 12B, 12C; 57A, 57B; 62A, 62B, 62C, 62D) is configured to carry out the method according to one of Claims 2 to 8.

13. System (10; 50; 60) comprising a slave device (12A, 12B, 12C; 57A, 57B; 62A, 62B, 62C, 62D) according to Claim 11 or 12, and a master device (11; 51; 61) which is configured to transmit the initialization signal and to transmit the address.

14. System (10; 50; 60) according to Claim 13, comprising a plurality of slave devices (12A, 12B, 12C; 57A, 57B; 62A, 62B, 62C, 62D),
wherein the master device (11; 51; 61) is configured to transmit the initialization signal again after transmitting the address until all slave devices (12A, 12B, 12C; 57A, 57B; 62A, 62B, 62C, 62D) are assigned an address.

## Revendications

1. Procédé, comprenant :
dans un dispositif (12A, 12B, 12C ; 57A, 57B ; 62A, 62B, 62C, 62D) esclave,
- réception d'un signal d'initialisation,
- en réponse au signal d'initialisation, envoi d'une identification du dispositif (12A, 12B, 12C ; 57A, 57B ; 62A, 62B, 62C, 62D) esclave en passant par un bus (13 ; 53 ; 63),
**caractérisé en ce que** le procédé comprend en outre :
- contrôle du point de savoir, s'il s'est produit une collision sur le bus (13 ; 53 ; 63), lors de l'envoi de l'identification d'initialisation,
- si une collision s'est produite, mise du dispositif (12A, 12B, 12C ; 57A, 57B ; 62A, 62B, 62C, 62D) esclave dans un état inactif, et
- s'il ne s'est pas produit de collision, réception d'une adresse pour le dispositif (12A, 12B, 12C ; 57A, 57B ; 62A, 62B, 62C, 62D) esclave après l'envoi de l'identification.

2. Procédé suivant la revendication 1, dans lequel le contrôle du point de savoir, s'il s'est produit une collision sur le bus (13 ; 53 ; 63), comprend,
constatation qu'une collision s'est produite, si un niveau sur le bus (13 ; 53 ; 63) ne correspond pas à une valeur escomptée sur la base de l'identification envoyée.

3. Procédé suivant la revendication 1 ou 2, dans lequel le bus (13 ; 53 ; 63) a un niveau dominant ou un niveau récessif, et dans lequel il y a une collision sur le bus (13 ; 53 ; 63), si, lors de l'envoi de l'identification, le niveau récessif est mis sur le bus (13 ; 53 ; 63) par le dispositif (12A, 12B, 12C ; 57A, 57B ; 62A, 62B, 62C, 62D) esclave et il y a sur le bus (13 ; 53 ; 63) le niveau dominant.

4. Procédé suivant la revendication 3, dans lequel le procédé comprend un envoi d'une autre identification par un autre dispositif (12A, 12B, 12C ; 57A, 57B ; 62A, 62B, 62C, 62D) esclave en réponse au signal d'initialisation, et dans lequel il y a la collision sur le bus (13 ; 53 ; 63), si l'autre dispositif (12A, 12B, 12C ; 57A, 57B ; 62A, 62B, 62C, 62D) esclave met le niveau dominant sur le bus (13 ; 53 ; 63).

5. Procédé suivant l'une des revendications 1 à 4, dans lequel le contrôle du point de savoir, s'il y a une collision sur le bus (13 ; 53 ; 63), s'effectue sur la base d'un signal sur une ligne (TxD) d'envoi du dispositif (12A, 12B, 12C ; 57A, 57B ; 62A, 62B, 62C, 62D) esclave.

6. Procédé suivant l'une des revendications 1 à 5, dans lequel le dispositif (12A, 12B, 12C ; 57A, 57B ; 62A, 62B, 62C, 62D) esclave est disposé dans un groupe (52A, 52B) d'esclaves, dans lequel plusieurs dispositifs (12A, 12B, 12C ; 57A, 57B ; 62A, 62B, 62C, 62D) esclaves partagent une interface (56) de bus.

7. Procédé suivant la revendication 5 ou 6, dans lequel le dispositif (12A, 12B, 12C ; 57A, 57B ; 62A, 62B, 62C, 62D) esclave utilise pour l'envoi de l'identification un circuit d'attaque push-pull, dans lequel un transistor push ou un transistor push-pull du circuit d'attaque push-pull est plus faible que l'autre du transistor push ou du transistor pull.

8. Procédé suivant l'une des revendications 1 à 7, dans lequel le contrôle du point de savoir, s'il y a une collision, s'effectue sur la base d'un signal sur une ligne (RxD) de réception du dispositif (12A, 12B, 12C ; 57A, 57B ; 62A, 62B, 62C, 62D) esclave.

9. Procédé suivant l'une des revendications 1 à 8, comprenant en outre l'envoi du signal d'initialisation par un dispositif (11 ; 51 ; 61) maître et l'envoi de l'adresse par le dispositif (11 ; 51 ; 61) maître.

10. Procédé suivant l'une des revendications 1 à 9, dans lequel on répète le procédé au moins jusqu'à ce qu'une adresse soit affectée au dispositif (12A, 12B, 12C ; 57A, 57B ; 62A, 62B, 62C, 62D) esclave.

11. Dispositif (12A, 12B, 12C ; 57A, 57B ; 62A, 62B, 62C, 62D) esclave, comprenant :
un circuit de communication pour l'envoi de signaux à un bus (13 ; 53 ; 63) et pour la réception de signaux par le bus (13 ; 53 ; 63), dans lequel le dispositif (12A, 12B, 12C ; 57A, 57B ; 62A, 62B, 62C, 62D) esclave est agencé pour :
- la réception d'un signal d'initialisation,
**caractérisé en ce que** le dispositif esclave est agencé pour :
- en réponse au signal d'initialisation, l'envoi d'une identification du dispositif (12A, 12B, 12C ; 57A, 57B ; 62A, 62B, 62C, 62D) esclave, en passant par le bus (13 ; 53 ; 63),
- le contrôle du point de savoir, s'il se produit une collision sur le bus (13 ; 53 ; 63), lors de l'envoi de l'identification,
- s'il se produit une collision, la mise du dispositif (12A, 12B, 12C ; 57A, 57B ; 62A, 62B, 62C, 62D) esclave dans un état inactif, et
- s'il ne se produit pas de collision, la réception d'une adresse pour le dispositif (12A, 12B, 12C ; 57A, 57B ; 62A, 62B, 62C, 62D) esclave après l'envoi de l'identification.

12. Dispositif (12A, 12B, 12C ; 57A, 57B ; 62A, 62B, 62C, 62D) esclave suivant la revendication 11, dans lequel le dispositif (12A, 12B, 12C ; 57A, 57B ; 62A, 62B, 62C, 62D) esclave est agencé pour effectuer le procédé suivant l'une des revendications 2 à 8.

13. Système (10 ; 50 ; 60), comprenant un dispositif (12A, 12B, 12C ; 57A, 57B ; 62A, 62B, 62C, 62D) esclave suivant la revendication 11 ou 12, et un dispositif (11 ; 51 ; 61) maître, qui est agencé pour l'envoi du signal d'initialisation et pour l'envoi de l'adresse.

14. Système (10 ; 50 ; 60) suivant la revendication 13, comprenant plusieurs dispositifs (12A, 12B, 12C ; 57A, 57B ; 62A, 62B, 62C, 62D) esclaves,
dans lequel le dispositif (11 ; 51 ; 61) maître est agencé pour envoyer, après l'envoi de l'adresse, à nouveau le signal d'initialisation jusqu'à ce qu'une adresse ait été affectée à tous les dispositifs (12A, 12B, 12C ; 57A, 57B ; 62A, 62B, 62C, 62D) esclaves.
